# EUROPEAN PATENT APPLICATION

(11) **EP 1 043 539 A1**
(43) Date of publication of application: **11.10.2000**
(21) Application number: 00830259.8
(22) Date of filing: 05.04.2000
(51) Int. Cl.: F16M 11/06

(54) **Braking device for support brackets**

(30) Priority: 09.04.1999 IT RM990071 U
(71) Applicant: De Sisti Lighting S.p.a., Cecchina, 00040 Albano Laziale (Roma) (IT)
(72) Inventor: De Sisti, Fabio, 00040 Albano Laziale (Roma) (IT); De Sisti, Mario, 00040 Albano Laziale (Roma) (IT)
(74) Representative: Iannone, Carlo Luigi

(57) **Abstract**

The invention relates to a braking device for support brackets (1), particularly brackets for projectors (2), comprising a first element (3), provided on the side faced toward the projector (2), and a second element (4), provided on the side faced toward the bracket (1), said first (3) and second (4) element being conically shaped in a complementary way, elastic means (8) interposed between said first (3) and second (4) element, and tightening and releasing means (6, 7) for the coupling between said first (3) and second (4) element.

## Description

The present invention relates to a braking device for support brackets.

More specifically, the invention relates to a device of the above kind, particularly, but not exclusively, studied for support brackets for projectors employed in the cinema and TV shooting field.

As it is well known, in the cinema and TV field projectors having very big sizes, with a noticeable weight, are employed, that must be oriented according to the specific needing of the shooting.

Recently, in order to obtain better results as far as the shootings are concerned, different fittings, such as screens, filters, etc. are applied on the projector, that are already enough heavy per se, said fitting, even not particularly heavy, are very bulky, unavoidably displacing the barycenter of the structure.

It is also known that said projectors are supported on brackets allowing their orientation, said brackets being provided with braking systems for blocking the projector in a proper position.

It is well evident how the adding of the fittings, and thus the displacement of the barycenter of the structure, brakes of these brackets are subjected to a always increasing stress, not being any more able to guarantee the necessary position stability of the projectors, particularly when the latter are manually or automatically oriented during the shootings.

In view of the above, the Applicant has realised an improved braking device which allows to obviate to all the above mentioned drawbacks.

In fact, the solution according to the present invention allows to have a braking device by which it is possible to lock and release the position of the bracket of the projector by the minimum effort and the with the maximum safety.

It is therefore specific object of the present invention a braking device for support brackets, particularly brackets for projectors, comprising a first element, provided on the side faced toward the projector, and a second element, provided on the side faced toward the bracket, said first and second element being conically shaped in a complementary way, elastic means interposed between said first and second element, and tightening and releasing means for the coupling between said first and second element.

Preferably, according to the invention, said first element is conically shaped on its inner surface, and said second element is conically shaped on its outer surface.

Still according to the invention, Belleville washers are provided between said first and second element.

Furthermore, according to the invention, said tightening and releasing means for the coupling of said first and second element can be comprised of a threaded pin, provided with a handle.

The present invention will be now described, for illustrative but not limitative purposes, according to its preferred embodiments, with particular reference to the figures of the enclosed drawings, wherein:

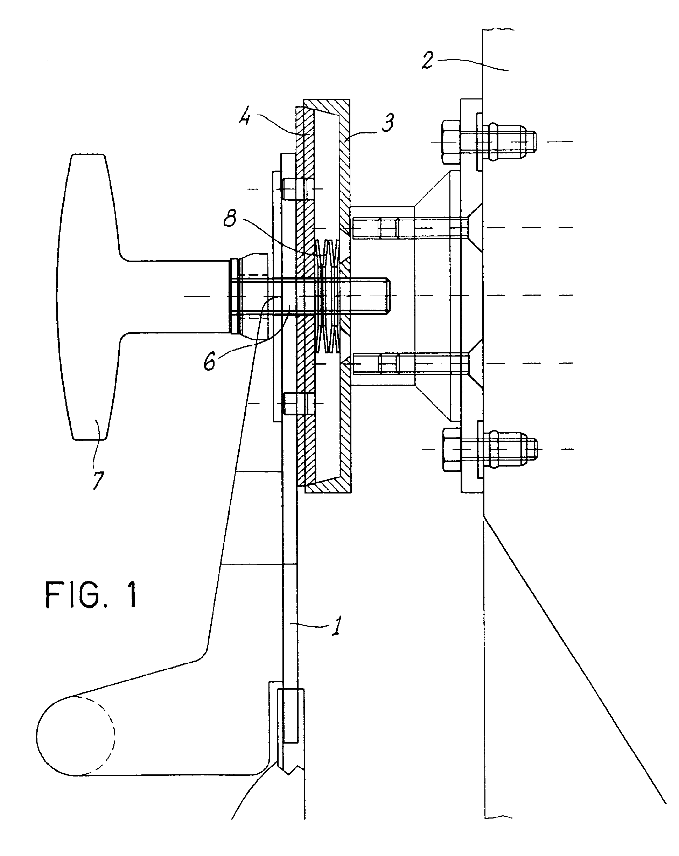

figure 1 is a partially sectioned front view of the device according to the invention; and

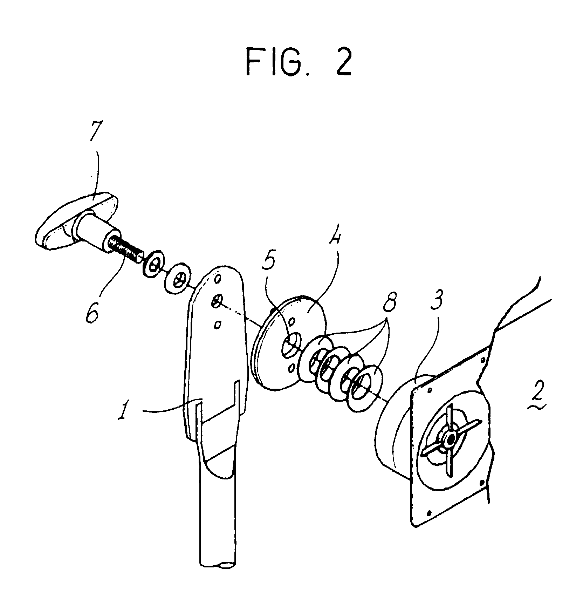

figure 2 is an exploded view of the braking device according to the invention.

Observing now both figures of the enclosed drawings, it can be noted a device according to the invention provided on the support bracket 1 for a projector 2, being obviously the bracket 1 and the projector 2 exemplificative and not limitative of the invention.

The device according to the invention comprises a first element 3, coupled with the projector 2, having its inner part conically shaped, and a second element 4, coupled with the bracket 1, and externally conically shaped, in a complementary way with respect to the shaping of the first element 3.

Said second element 4 is provided with a central hole 5 for the passage of a threaded pin 6, with a handle 7, which is screwed in a suitable threaded seat realised in said first element 3.

Between said complementary conically shaped first element 3 and said second element 4, Belleville washers 8 are interposed, that smoothly buck the tightening action of the two elements 3 and 4 and cooperate to help to move away the same when it is necessary to obtain the releasing.

The solution suggested according to the present invention is thus based on the co-operation of the two conical surfaces that, when tightening the device, increases the contact, thus improving the braking effect, and further is based on the action of the Belleville washers 8 when releasing the device.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Braking device for support brackets, particularly brackets for projectors, characterised in that it comprises a first element, provided on the side faced toward the projector, and a second element, provided on the side faced toward the bracket, said first and second element being conically shaped in a complementary way, elastic means interposed between said first and second element, and tightening and releasing means for the coupling between said first and second element.

2. Braking device for support brackets according to claim 1, characterised in that said first element is conically shaped on its inner surface, and said second element is conically shaped on its outer surface.

3. Braking device for support brackets according to one of the preceding claims, characterised in that Belleville washers are provided between said first and second element.

4. Braking device for support brackets according to one of the preceding claims, characterised in that said tightening and releasing means for the coupling of said first and second element are comprised of a threaded pin, provided with a handle.

5. Braking device for support brackets according to each one of the preceding claims, substantially as illustrated and described.
